# EUROPÄISCHE PATENTANMELDUNG

(11) **EP 4 464 495 A1**
(43) Veröffentlichungstag der Anmeldung: **20.11.2024**
(21) Anmeldenummer: 24175552.9
(22) Anmeldetag: 13.05.2024
(51) Int. Cl.: B29C 45/27

(54) **DÜSENRIEGEL, DÜSENANORDNUNG, SPRITZGIESSWERKZEUG UND SPRITZGUSSVERFAHREN ZUM HERSTELLEN EINES PRODUKTS**

(30) Priorität: 16.05.2023 DE 102023112957
(71) Anmelder: Günther Heisskanaltechnik GmbH, 35066 Frankenberg (DE)
(72) Erfinder: Sommer, Siegrid, 35099 Burgwald (DE); Sommer, Stefan, 35099 Burgwald (DE); Schnell, Torsten, 35104 Lichtenfels (DE)
(74) Vertreter: Patentanwälte Olbricht Buchhold Keulertz

(57) **Zusammenfassung**

Die vorgestellte Erfindung betrifft einen Düsenriegel (100) für ein Heißkanalsystem zum Verarbeiten einer fließfähigen Masse. Der Düsenriegel (100) umfasst eine Vielzahl Rohre (101) zum Leiten der fließfähigen Masse durch den Düsenriegel und einen Kopfbereich (117), in dem Verteilerkanäle zum Verteilen der fließfähigen Masse auf jeweilige Rohre der Vielzahl Rohre (101) ausgebildet sind, wobei an einem dem Kopfbereich (117) gegenüberliegenden ersten Ende jeweiliger Rohre (101) der Vielzahl Rohre (101) Ausnehmungen (109) ausgebildet sind, und wobei die Ausnehmungen (109) erste Zwischenräume (111) zwischen jeweiligen Rohren (101) zur Aufnahme von an einem Formeinsatz (200) ausgebildeten Verstärkungselementen (205) bilden.

## Beschreibung

Die Erfindung betrifft einen Düsenriegel sowie eine Düsenanordnung mit einem solchen Düsenriegel für ein Heißkanalsystem, ein Spritzgießwerkzeug mit einem Düsenriegel oder einer Düsenanordnung sowie einem Formeinsatz bzw. einer Formnestplatte, und ein Spritzgussverfahren, zum Herstellen eines Produkts, insbesondere von Mikrotiterplatten oder Kavitätenplatten (englisch: well plates oder microwell plates), gemäß den beigefügten Ansprüchen.

Heißkanal- oder Kaltkanalsysteme sind allgemein bekannt. Sie werden in Spritzgießwerkzeugen eingesetzt, um eine fließfähige Masse bei einer vorgebbaren Temperatur unter Druck einem trennbaren Werkzeugblock mit darin ausgebildeten Formeinsätzen (Formnestern oder Kavitäten) zuzuführen. Die fließfähige Masse wird über Verteilerkanäle einem oder mehreren materialführenden Rohren (Materialrohre) zugeführt, die jeweils endseitig über eine Düsenspitze, einem Düsenmundstück oder - bei Nadelverschlussdüsen - über eine Nadelführung in ein jeweils zugeordnetes Formnest in einem Formeinsatz münden. Die Formeinsätze sitzen meist in einer Formnestplatte oder bilden eine solche.

Die Verteilerkanäle sind in einer oder in mehreren Verteilerplatten ausgebildet, an welchen die materialführenden Rohre angeschlossen sind. Letztere können gruppenweise zusammengefasst sein und einen Düsenriegel bilden, vorzugsweise in einem Mehrfachwerkzeug mit einer Vielzahl an Formnestern.

Damit die fließfähige Masse innerhalb der Düsen nicht vorzeitig abkühlt, ist meist eine Heizung vorgesehen, welche die materialführenden Rohre und damit das in den darin ausgebildeten Strömungskanälen geführte Material auf einer gewünschten Temperatur hält. Werden hingegen beispielsweise reaktive Polymere verarbeitet, ist es erforderlich, die Düse zu kühlen, damit die zu verarbeitende Masse beim Eintritt in die Formnester eine bestimmte Temperatur nicht übersteigt. Zur Erfassung der Temperatur verwendet man gewöhnlich einen oder mehrere Temperaturfühler.

Für die Herstellung von Produkten, die eine relativ große Anzahl an Anspritzpunkten benötigen oder aufweisen, werden mehrere Düsenriegel verwendet, die parallel nebeneinander angeordnet eine Düsenanordnung bilden, so dass die materialführenden Rohre mit geringem Abstand untereinander in einer Matrix oder in einem Raster liegen, wobei vorzugsweise jedes Materialrohr eine Kavität bedient (siehe beispielsweise EP 1 254 004 A1).

Bei großflächigen Produkten, wie z.B. einer Mikrotiterplatte oder einer Kavitätenplatte, die durch Verwendung einer Vielzahl an eng benachbarten Düsen hergestellt werden muss, kann es jedoch zu Situationen kommen, in denen sich der Formeinsatz oder die Formnestplatte bspw. bei einem Transport oder einer Bewegung während eines Spritzgussvorgangs verformt oder verbiegt. Ein solcher Formeinsatz kann zu erheblichen Problemen während des Spritzgießens führen und ein verformtes bzw. mangelhaftes Produkt bzw. Formteil zur Folge haben.

Vor diesem Hintergrund ist es eine Aufgabe der vorgestellten Erfindung, eine Möglichkeit zum formkorrekten Spritzgießen eines großflächigen oder kompelxen Produkts bereitzustellen.

Gemäß einem ersten Aspekt der vorgestellten Erfindung wird ein ein Düsenriegel für ein Heißkanalsystem zum Verarbeiten einer fließfähigen Masse vorgestellt.

Dabei sieht die Erfindung vor, dass ein Düsenriegel für ein Heißkanalsystem zum Verarbeiten einer fließfähigen Masse einen Kopfbereich hat, der eine Vielzahl materialführender Rohre trägt oder bildet, wobei der Kopfbereich und die Vielzahl der materialführenden Rohre zum Leiten der fließfähigen Masse durch den Düsenriegel ausgebildet sind, und wobei jedes materialführende Rohr einen Rohr-Hauptteil und einen Rohr-Anbindungsbereich aufweist. Der Düsenriegel hat ferner Aussparungen, die an einem dem Kopfbereich gegenüberliegenden Ende jeweiliger Rohre der Vielzahl Rohre ausgebildet sind, wobei jede Aussparung in Richtung des Kopfbereichs oberhalb des Anbindungsbereichs im Rohr-Hauptteil eines jeden Rohres ausgebildet ist, und wobei jeweils zumindest zwei Aussparungen benachbarter Rohre Zwischenräume bilden.

Unter einem materialführenden Rohr (Materialrohr) ist im Kontext der vorgestellten Erfindung eine Materialanordnung zu verstehen, in der eine Ausnehmung bzw. ein Strömungskanal ausgebildet ist, durch den fließfähige Masse unter Druck dem trennbaren Werkzeugblock mit den darin ausgebildeten Formnestern (Kavitäten) zugeführt werden kann.

Der Düsenriegel fasst dabei die materialführenden Rohre über den Kopfbereich gruppenweise zusammen, wobei die Materialrohre, insbesondere deren Rohr-Hauptteile innerhalb des Düsenriegels parallel verlaufen und relativ dicht nebeneinander angeordnet sind, um einen möglichst kleinen Nestabstand in der Werkzeugplatte realisieren zu können. Damit jedes Materialrohr optimal an den trennbaren Werkzeugblock und das jeweils zugeordnete Formnest angebunden ist, hat jedes materialführende Rohr einen Rohr-Anbindungsbereich, der bevorzugt formschlüssig und dichtend in den Werkzeugblock eingreift, vorzugsweise in eine in oder an dem Werkzeugblock ausgebildete Formnestplatte, welche die Formnester ausbildet und die mit entsprechenden Ausnehmungen für die Rohr-Anbindungsbereiche versehen ist. Dadurch ist gewährleistet, dass jedes Materialrohr das jeweils zugeordnete Formnest exakt befüllen kann.

Wesentliche Vorteile der Erfindung basieren darauf, dass jedes Materialrohr an seinem dem Kopfbereich des Düsenriegels abgewandten Ende Aussparungen hat, die zusammen mit den Aussparungen jeweils benachbarter Materialrohre Zwischenräume schaffen. Jeder dieser Zwischenräume bildet einen Aufnahmeraum, vorzugsweise für Abschnitte oder Elemente des Werkzeugblocks, der Formnestplatte und/oder der Formeinsätze. Diese Abschnitte oder Elemente können beispielsweise Verstärkungselemente sein oder bilden, die dazu beitragen die Formnestplatte und/oder die Formeinsätze zu verstärken oder zu versteifen.

Dies ist besonders dann von Vorteil, wenn mit dem Düsenriegel großflächige oder größere Produkte hergestellt werden, namentlich Mikrotiterplatten oder Kavitätenplatten (englisch: well plates oder microwell plates), die mit 48, 96 oder mehr Kavitäten (englisch: wells) zu versehen sind. Die Nestabstände in einem solchen Werkzeug und damit die Abstände der Materialrohre untereinander sind hierbei relativ eng ausgebildet.

Eine Weiterbildung der Erfindung sieht vor, dass jede Aussparung unmittelbar über dem Anbindungsbereich eines jeden Rohres ausgebildet ist. Die Zwischenräume liegen damit unmittelbar über der Formnestplatte und/oder den Formeinsätzen und bieten damit zusätzlichen Raum für deren verstärkende oder versteifende Abschnitte oder Elemente, die unmittelbar darin eingreifen können, ohne dass sich die Außenabmessungen des Heißkanalsystems ändern oder gar vergrößern.

Für die Ausgestaltung der Aussparungen ist es günstig, wenn letztere in Bezug auf eine Längsrichtung der materialführenden Rohre schräg verlaufen, wobei sich der Querschnitt eines jeden Rohr-Hauptteils eines materialführenden Rohres an seinem dem Kopfbereich des Düsenriegels abgewandten Enden zum Formnest hin verkleinert. Jeweils benachbarte Aussparungen der materialführenden Rohre bilden damit einen ersten Zwischenraum, der über den Rohr-Anbindungsbereichen der Mateiralrohre liegt und der im Wesentlichen konisch ausgebildet ist und sich mithin in Richtung Formnest vergrößert. Durch den schrägen Verlauf der Aussparungen lassen sich die Zwischenräume maximieren, um einen möglichst großen Aufnahmeraum für Elemente oder Abschnitte der Formnestplatte zu schaffen, ohne jedoch die Stabilität der Materialrohre zu beeinträchtigen.

Die Aussparungen an den Enden der materialführenden Rohre weisen vorzugsweise ebene Flächen auf. Letztere können jedoch auch gekrümmt oder konvex ausgebildet sein. Beispielsweise kann dadurch der erste Zwischenraum im Wesentlichen pyramiden- oder kegelförmig ausgebildet sein.

Für die Bildung der Zwischenräume oberhalb der Rohr-Anbindungsbereiche ist weiter von Vorteil, wenn an jedem materialführenden Rohr mindestens zwei, vorzugsweise vier Aussparungen ausgebildet sind. Einander benachbarte Materialrohre schaffen damit sowohl innerhalb eines Düsenriegels als auch innerhalb einer Düsenanordnung, die von mehreren Düsenriegeln gebildet ist, eine Vielzahl an Zwischenräumen.

Dadurch ist es möglich, die Formnestplatte im Bereich eines jeden Formnests mit zusätzlichen Abschnitten oder Elementen zu versehen, die in die jeweils zugeordneten und zwischen den materialführenden Rohren gebildeten Zwischenräume hineinragen können.

Der vorgestellte Düsenriegel ist bevorzugt als monolithischer Block ausgebildet, d.h. der Kopfbereich und die jeweiligen materialführenden Rohre sind einstückig ausbildet. Dabei kann der Düsenriegel aus einem einzigen Stück Metall (aus dem Vollen) hergestellt werden. Alternativ ist auch die Fertigung im 3D-Druck möglich, z.B. mittels additiver oder generativer Fertigung oder unter Verwendung von Rapid-Technologien. Ja nach Anwendung kann der Düsenriegel kann auch mehrteilig ausgebildet sein, wobei die materialführenden Rohre in den Kopfbereich eingesetzt und darin fixiert sind, z.B. durch Verschrauben, Verschweißen oder Verpressen. Der Kopfbereich ist hierfür mit entsprechenden Aufnahmen für die Materialrohre versehen.

Im Kopfbereich des Düsenriegels sind Verteilerkanäle zum Verteilen der fließfähigen Masse auf jeweilige Rohre der Vielzahl Rohre ausgebildet. Jeder Düsenriegel wird über seinen Kopfbereich an eine Verteilerplatte des Heißkanalsystems angeschlossen.

Vorzugsweise sind die materialführenden Rohre des Düsenriegels als Materialvorsprünge aus einem Grundkörper ausgestaltet, so dass die Rohre über den Grundkörper hervorstehen, der beispielsweise den Kopfbereich des vorgestellten Düsenriegels umfassen bzw. bilden kann. Entsprechend kann der Düsenriegel ein Raster oder eine Matrix an Rohren ausbilden, die zumindest bereichsweise voneinander beabstandet sind.

Es kann weiterhin vorgesehen sein, dass die Matrix oder das Raster acht paarige Rohre umfasst.

Acht paarige Rohre, d.h. 16 Rohre pro Düsenriegel ermöglichen ein Zusammenfügen von 6 Düsenriegeln zu einer Düsenanordnung, um eine Mikrotiterplatte mit 96 Kavitäten (96 wells) herzustellen.

Mit dem Rohr-Anbindungsbereich greift jedes materialführende Rohr in eine Formnestplatte des trennbaren Werkzeugblocks ein. Die Formnestplatte ist hierfür nicht nur mit ensprechenden Ausnehmungen, sondern auch mit geeigneten Dichtsitzen versehen.

Der Rohr-Anbindungsbereich eines jeden Materialrohrs kann einstückig mit dem Rohr-Hauptteil ausgebildet sein. Der Rohr-Anbindungsbereich kann aber auch separat ausgebildet sein, beispielsweise in Form eines Düseneinsatzes. Dieser wiederum umfasst ein Düsenmundstück, eine Düsenspitze oder - bei einer Nadelverschlussdüse - eine Nadelführung. Ein zusätzlicher Dicht- oder Stützring aus einem schlecht wärmeleitenden Material, der auf das Düsenmundstück, die Düsenspitze oder die Nadelführung aufgesetzt ist, sorgt für eine thermische Trennung. Ein Dicht- oder Stützring kann auch unmittelbar auf oder an das Mateiralrohr auf bzw. angesetzt werden.

Die vorgestellte Erfindung basiert auf dem Prinzip, dass an den materialführenden Rohren des vorgestellten Düsenriegels neben den ohnehin bereits vorhandenen Abständen zwischen den Rohr-Hauptteilen zusätzliche oder ergänzende Aussparungen vorgesehen sind, so dass jeweils benachbarte materialführende Rohre an ihren dem Kopfbereich abgewandten Enden gemeinsam eine Vielzahl von Zwischenräumen bilden. Diese Zwischenräume liegen in Richtung des Kopfbereichs des Düsenriegels jeweils oberhalb des Anbindungsbereichs der Materialrohre, so dass jeder Zwischenraum einen Abschnitt oder ein Element der Formnestplatte oder der Formeinsätze aufnehmen kann. Die Abschnitte oder Elemente der Formnestplatte können als Erhebungen, Rippen, Säulen, Sockel, Wandungen o.dgl. ausgebildet sein.

Entsprechend ermöglicht der vorgestellte Düsenriegel die Ausbildung und Verwendung einer Formnestplatte oder von Formeinsätzen, die durch die zusätzlichen Abschnitte oder Elemente verstärkt ausgebildet und damit gegen Verformung oder Verwindung geschützt sind. Den für die zusätzlichen Abschnitte oder Elemente notwendige Raum wird jeweils von den Zwischenräumen geschaffen, den die Materialrohre oberhalb der Anbindungsbereiche ausbilden. Dabei kann sich jeder Formeinsatz bzw. die Formnestplatte mit ihren Abschnitten und Elementen in die Zwischenräume zwischen den Materialrohren und, dadurch bedingt, in den Düsenriegel hinein erstrecken.

Folglich lassen sich mit Hilfe der vorliegenden Erfindung in einem Mehrfachwerkzeug präzise und zuverlässig großflächige Produkte fertigen. Zugleich lassen sich innerhalb des Heißkanalsystems relativ enge Nestabstände realisieren, wobei überdies zusätzlich die Möglichkeit besteht, die von den Aussparungen an den Enden der benachbarten Materialrohre geschaffenen Zwischenräume für eine Verstärkung oder Gestaltung des Werkzeugblocks, namentlich der Formnestplatte oder der Formnesteinsätze, zu nutzen. Die Aussparungen ermöglichen zudem bei Bedarf auch eine besondere geometrische Gestaltung der Formnestplatte bzw. der Formeinsätze.

Die Erfindung sieht weiter vor, dass in oder auf den Seitenflächen der materialführenden Rohre und/oder des Kopfbereichs wenigstens ein Temperierungselement zum Temperieren des Düsenriegels ausgebildet ist. Hierbei kann es zweckmäßig sein, wenn das wenigstens eine Temperierungselement in einem Temperierungskanal liegt, der in die Seitenflächen der materialführenden Rohre und/oder des Kopfbereichs eingebracht ist.

Unter einem Temperierungskanal ist im Kontext der vorgestellten Erfindung eine Ausnehmung oder ein Bereich zum Aufnehmen eines Temperierungselements, wie z.B. einem Heizdraht oder einer Kühlmittelleitung zum Temperieren, d.h. zum Heizen oder zum Kühlen des Düsenriegels bzw. der materialführenden Rohre, zu verstehen.

Ein Temperierungskanal kann eine Nut sein, die zumindest abschnittsweise in den Düsenriegel eingebracht ist. Der Temperierungskanal kann hierbei mechanisch in den Düsenriegel eingearbeitet sein oder er wird konstruktiv in einem Plan zum 3D-Druck ausgebildet.

Die vorgestellte Erfindung basiert auf dem Prinzip, dass mindestens ein Temperierungskanal in dem Düsenriegel vorgesehen ist, dessen Verlauf sich zwischen jeweiligen Rohren der Vielzahl der materialführenden Rohre unterscheidet. Das Merkmal des Unterscheidens bezieht sich vorzugsweise auf unterschiedliche oder variierende Längen, unterschiedliche oder variierende Winkel relativ zueinander, unterschiedliche oder variierende Abstände oder Kombinationen davon.

Entsprechend bedingt der Verlauf eines jeweiligen Temperierungskanals eine unterschiedliche Übertragung von thermischer Energie auf unterschiedliche Rohre oder Bereiche des Düsenriegels. Dies bedeutet, dass ein jeweiliger Temperierungskanal einen spezifischen Eintrag von thermischer Energie in einem jeweiligen Rohr bedingt, so dass beispielsweise ein definierter Temperaturverlauf in dem Düsenriegel homogenisiert wird und ein besonders gleichmäßiger Fluss von fließfähiger Masse durch die Rohre sowie ein besonders gleichmäßiger Wärmeverzug des Düsenriegels erreicht wird.

Durch die Anzahl Temperierungskanäle des vorgestellten Düsenriegels werden besonders heiße Stellen bzw. sogenannte "hot spots", die zu schadhaften Stellen in einem Produkt und/oder dem Düsenriegel führen können, minimiert. Entsprechend eignet sich der vorgestellte Düsenriegel besonders vorteilhaft zum Spritzgießen eines Produkts mit mehreren parallelen bzw. gleichen Formen, wie beispielsweise einer Wellplatte, insbesondere einer 96-fach Wellplatte.

Es kann vorgesehen sein, dass ein Verlauf von in gegenüberliegenden Seiten des Düsenriegels angeordneten Randrohren ausgebildeten Randtemperierungskanälen sich von einem Verlauf von in zwischen den Randrohren ausgebildeten Mitteltemperierungskanälen unterscheidet.

Durch einen unterschiedlichen Verlauf eines Temperierungskanals am Rand und im Zentrum bzw. zwischen jeweiligen Rändern oder, alternativ, unterschiedlichen Temperierungskanälen am Rand und im Zentrum bzw. zwischen jeweiligen Rändern des Düsenriegels, wird bei gleicher Wärmeverteilung pro Volumen Temperierungskanal ein unterschiedlicher Wärmeeintrag zwischen den Rändern und dem Zentrum bzw. einem Bereich zwischen den Rändern erreicht.

Es kann weiterhin vorgesehen sein, dass die Randtemperierungskanäle länger sind als die Mitteltemperierungskanäle.

Alternativ können bspw. Temperierungskanäle bzw. Bereiche eines Temperierungskanals im Zentrum bzw. zwischen den Rändern länger oder kürzer ausgestaltet sein als Temperierungskanäle bzw. Bereiche eines Temperierungskanals am Rand des Düsenriegels.

Es kann weiterhin vorgesehen sein, dass ein jeweiliger in einem Rohr ausgebildeter bzw. verlaufender Temperierungskanal einen aufsteigenden Ast und einen absteigenden Ast umfasst, und jeweilige Mitteltemperierungskanäle und/oder Randtemperierungskanäle derart ausgestaltet sind, dass deren jeweiliger aufsteigender Ast und/oder deren absteigender Ast zueinander geneigt verlaufen.

Zueinander geneigt verlaufende Äste eines Temperierungskanals bedingen erste Bereiche, in denen die Äste weiter beabstandet sind als in zweiten Bereichen, in denen die Äste näher zueinander verlaufen, so dass der Grundkörper des Düsenriegels in dem ersten Bereich besonders wenig mechanisch geschwächt wird und entsprechend stabil ist. Ferner wird in dem ersten Bereich Platz geschaffen für bspw. eine Weiterführung des Temperierungskanals auf eine weitere Seite, ohne dass es zu einer Erhöhung eines Eintrags von thermischer Energie in den ersten Bereich durch die Weiterführung kommt.

In einer weiteren Ausführungsform der Erfindung ist vorgesehen, dass sich die Temperierungskanäle auf oder in einem materialführenden Rohr über mehrere Seitenflächen des jeweiligen Rohres erstrecken. Dies gilt insbesondere für Randrohre, die am Ende eines jeden Düsenriegels ausgebildet sind. Dadurch sind die Temperierungskanäle nicht nur auf einer Längsseite des Düsenriegels ausgebildet, sondern auch auf den Querseiten.

Es kann weiterhin vorgesehen sein, dass jeweilige Randrohre eine Schnittstelle zur thermischen Kopplung mit einem weiteren Düsenriegel umfassen.

Schnittstellen zur thermischen Kopplung mit einem weiteren Düsenriegel ermöglichen eine Parallelisierung mehrerer Düsenriegel zu einer Düsenanordnung mit besonders vielen Rohren, insbesondere 48, 96 oder mehr Rohren für die Ausbildung von 48, 96 oder mehr einzelnen Anspritzpunkten.

Es kann weiterhin vorgesehen sein, dass an jeweiligen Randrohren mehrere Temperierungskanäle und an jeweiligen Mittelrohren lediglich ein Temperierungskanal ausgebildet ist.

Da Randrohre in der Regel mehrere freiliegende Oberflächen ausbilden, kann an jeder freiliegenden Oberfläche ein Temperierungskanal ausgebildet werden, um einen Verlust an thermischer Energie durch die freiliegenden Oberflächen zu kompensieren.

In der Nut ist ein Heizelement montiert oder eingebracht. Dieses kann als elektrischer Widerstandsdraht oder als Dickschichtheizer ausgebildet sein. Das Heizelement kann auch ein Rohr (Heizrohr) sein, in dem ein thermisches Fluid geführt wird.

Ein elektrisches Heizelement eignet sich besonders vorteilhaft zum Heizen des Düsenriegels. Ein thermisches Fluid eignet sich zum Heizen oder Kühlen des Düsenriegels.

Es kann weiterhin vorgesehen sein, dass zumindest ein Teil der Mitteltemperierungskanäle sich in den Kopfbereich des Düsenriegels erstreckt und jeweilige Randtemperierungskanäle sich nicht in den Kopfbereich des Düsenriegels erstrecken.

Durch ein Erstrecken eines Temperierungskanals in den Kopfbereich kann ein optimales Temperaturprofil in dem Düsenriegel eingestellt werden, da ein Abfluss von thermischer Energie aus den Rohren in den Kopfbereich kompensiert werden kann.

Es kann weiterhin vorgesehen sein, dass lediglich jeweilige um einen zentralen Mitteltemperierungskanal des Düsenriegels herum angeordnete Mitteltemperierungskanäle sich in den Kopfbereich des Düsenriegels erstrecken.

Da im Bereich des zentralen Mitteltemperierungskanals der Kopfbereich besonders viel Material umfasst, hat sich eine Erstreckung von um den zentralen Mitteltemperierungskanal des Düsenriegels herum angeordneten Mitteltemperierungskanälen in den Kopfbereich als besonders geeignet zur Kompensation eines Abflusses von thermischer Energie in den Kopfbereich erwiesen.

Es kann weiterhin vorgesehen sein, dass ein Abstand zwischen durch jeweilige Rohre vorgegebenen Anspritzpunkten 9 Millimeter beträgt.

Ein Abstand von 9 Millimetern zwischen jeweiligen Anspritzpunkten bzw. Austrittspunkten von fließfähiger Masse aus dem Düsenriegel, ermöglicht ein Spritzgießen einer für den medizinischen Gebrauch gemäß gängigem Laborstandard geeigneten Wellplattenstreifen, die aneinandergereiht zu einer Wellplatte bspw. durch bekannte Laborroboter verwendet werden können.

Es kann weiterhin vorgesehen sein, dass der Abstand in 2 Raumrichtungen zwischen durch jeweilige Rohre vorgegebenen Anspritzpunkten 9 Millimeter beträgt.

Ein Abstand von 9 Millimetern in 2 Raumrichtungen zwischen jeweiligen Anspritzpunkten ermöglicht ein Spritzgießen einer für den medizinischen Gebrauch gemäß gängigem Laborstandard geeigneten Wellplatte, insbesondere einer 96-fach Wellplatte, die bspw. durch bekannte Laborroboter verwendet werden kann.

Es kann weiterhin vorgesehen sein, dass die Rohre unter dem Kopfbereich eine Matrix bilden.

Eine Matrix bzw. ein Raster mit gleichmäßigen Abständen zwischen jeweiligen Rohren ermöglicht ein Spritzgießen einer Wellplatte, insbesondere einer 96-fach Wellplatte in einem sogenannten "one-shot" Verfahren.

Aus thermischen Gründen, insbesondere für die Zulassung einer Wärmedehnung des Düsenriegels, sind die Materialrohre innerhalb des Düsenriegels zumindest abschnittsweise voneinander beabstandet, d.h. die materialführenden Rohre des Düsenriegels sind durch Ausnehmungen zumindest abschnittsweise voneinander beabstandet, wobei die Ausnehmungen in Längs- und/oder Querrichtung des Düsenriegels zwischen den materialführenden Rohren verlaufen.

Die Ausnehmungen zwischen den materialführenden Rohren sind zumindest abschnittsweise in Längs- und/oder Querrichtung des Düsenriegels ausgebildet. Vorzugsweise liegen die Ausnehmungen zwischen den Rohr-Hauptteilen der materialführenden Rohre.

Konstruktiv ist es dabei von Vorteil, wenn die von den Aussparungen der materialführenden Rohre geschaffenen Zwischenräume innerhalb des jeweiligen Düsenriegels in wenigstens einer Dimension größer sind als die zwischen den materialführenden Rohren bestehenden Ausnehmungen.

Die Abschnitte oder Elemente der Formnestplatte oder der Formeinsätze können dadurch ausreichend groß dimensioniert werden, was sich günstig auf die Stabilität und Steifigkeit des Werkzeugs auswirkt. Die von den Materialrohren geschaffenen Zwischenräume lassen sich optimal nutzen.

Eine weitere Ausführungsform der Erfindung sieht vor, dass die materialführenden Rohre im Außenquerschnitt zylindrisch oder quaderförmig ausgebildet sind.

Eine zylindrische Grundform der materialführenden Rohre bedingt eine kompakte Form des Düsenriegels. Diese Grundform wird vorzugsweise durch die Ausnehmungen an den Enden der Materialrohre verändert, um in den Zwischnräumen jeweilige Verstärkungselemente der Formnestplatte aufzunehmen.

Eine weitere Bauform sieht vor, dass der Rohr-Hauptteil eines jeden materialführenden Rohres einen im Wesentlichen eckigen oder rechteckigen Querschnitt mit in Längsrichtung verlaufender Eckkanten aufweist, wobei die Aussparungen im Bereich der Eckkanten ausgebildet sind.

Um einen robusten Düsenriegel und ausreichend Raum zur Aufnahme jeweiliger Abschnitte oder Elemente der Formnestplatte oder der Formeinsätze sicherzustellen, können die Zwischenräume und damit die jeweils zugehörigen Aussparungen über den Rohr-Anbindungsbereichen der Materialrohre spezifisch an einen jeweiligen Formeinsatz oder eine Formnestplatte angepasst sein.

Insbesondere kann vorgesehen sein, dass jeweilige Zwischenräume der Materialrohre eine Negativform der Abschnitte und/oder Elemente eines Formeinsatzes oder einer Formnestplatte ausbilden.

Wichtig ist ferner, dass in zumindest einem Teil der zwischen den Rohren verlaufenden Ausnehmungen ein weiteres Temperierungselement angeordnet ist, wobei das Temperierungselement vorzugsweise eine Dickschichtheizung umfasst oder aufweist.

Konstruktiv ist es günstig, wenn das Temperierungselement streifen- oder plattenförmig ausgestaltet ist. Dadurch lässt sich das Temperierungselement in den Ausnehmungen zwischen den materialführenden Rohren anordnen. Dies ermöglicht eine zusätzliche gezielte Temperierung des Düsenriegels, insbesondere ein zusätzliches Beheizen der Rohre, um den Temperaturverlauf in dem Düsenriegel, insbesondere in den Rohren zu beeinflussen und weiter zu vergleichmäßigen.

Es kann weiterhin vorgesehen sein, dass der Düsenriegel eine Anzahl Düsennadeln zum Steuern eines Volumenstroms der fließfähigen Masse durch den Düsenriegel umfasst.

Düsennadeln ermöglich ein präzises Steuern eines Stroms von fließfähiger Masse durch jeweilige Rohre des Düsenriegels.

Es kann weiterhin vorgesehen sein, dass an einem ersten Ende eines jeweiligen Rohrs ein Düsenmundstück, eine Düsenspitze und/oder eine Nadelführung angeordnet ist, deren Querschnitt kleiner ist als ein Querschnitt des ersten Endes des jeweiligen Rohrs bzw. Düsenschafts.

Es kann weiterhin vorgesehen sein, dass der Düsenriegel eine Anzahl Düsennadeln zum Steuern eines Volumenstroms der fließfähigen Masse durch den Düsenriegel umfasst.

Düsennadeln ermöglich ein präzises Steuern eines Stroms von fließfähiger Masse durch jeweilige Rohre des Düsenriegels. Düsennadeln ermöglich ein präzises Steuern eines Stroms von fließfähiger Masse durch jeweilige Rohre des Düsenriegels.

Gemäß einem zweiten Aspekt betrifft die vorgestellte Erfindung eine Düsenanordnung für ein Heißkanalsystem zum Verarbeiten einer fließfähigen Masse, wobei die Düsenanordnung eine Vielzahl des vorgestellten Düsenriegels umfasst.

Es kann vorgesehen sein, dass die Düsenanordnung sechs Düsenriegel umfasst, die jeweils acht Rohrpaare umfassen.

Acht paarige Rohre, d.h. 16 Rohre pro Düsenriegel ermöglichen bei einem Zusammenschluss von 6 Düsenriegeln das Spritzgießen einer 96-Wellplatte in einem "one-shot" Verfahren.

Es kann weiterhin vorgesehen sein, dass zwischen jeweiligen Düsenriegeln Zwischenelemente angeordnet sind, die dazu konfiguriert sind, thermische Energie in angrenzende Düsenriegel einzuleiten oder thermische Energie aus angrenzenden Düsenriegeln abzuführen.

Zwischenelemente, wie bspw. flächige Elemente aus Metall oder einem thermischen Isolator, ermöglichen die Kontrolle eines thermischen Flusses zwischen jeweiligen Düsenriegeln, so dass ein besonders gleichmäßiger thermischer Fluss durch die Düsenanordnung eingestellt werden kann. Dazu können die Zwischenelemente bspw. zwischen jeweilige Düsenriegel geklemmt und/oder mit jeweiligen Düsenriegeln verbunden insbesondere stoffschlüssig verbunden, bspw. verklebt oder verschweißt werden.

Gemäß einem dritten Aspekt betrifft die vorgestellte Erfindung ein Spritzgießwerkzeug zum Verarbeiten einer fließfähigen Masse, mit wenigstens einem erfindungsgemäßen Düsenriegel und mit einer Formnestplatte oder einem Formeinsatz, wobei die Formnestplatte und/oder der Formeinsatz eine Vielzahl Elemente oder Abschnitte umfasst, die sich in montierter Position der Formnestplatte oder der Formeinsätze und bei geschlossenem Spritzgießwerkzeug in jeweils zugeordnete Zwischenräume des Düsenriegels hinein erstrecken.

Der vorgestellte Formeinsatz ist aufgrund der Elemente oder Abschnitte, die vorzugsweise Verstärkungselemente bilden, besonders robust gegen Verformungen oder Verwindungen, so dass die Formnestplatte oder die Formeinsätze besonders großflächig, insbesondere in der Fläche einer 96-Wellplatte, ausgestaltet werden können.

Weiter kann vorgesehen sein, dass die Formnestplatte oder die Formnesteinsätze des Spritzgießwerkzeugs in montierter Position der Formnestplatte oder der Formeinsätze und bei geschlossenem Spritzgießwerkzeug in jeweils zugeordnete Zwischenräume eingreifen, die von der erfindungsgemäßen Düsenanordnung gebildet werden. Insoweit umfasst das Spritzgießwerkzeug eine erfindungsgemäße Düsenanordnung.

Gemäß einem vierten Aspekt betrifft die vorgestellte Erfindung ein Spritzgussverfahren zum Herstellen eines Produkts, wobei das Spritzgussverfahren das Spritzgießen des Produkts mittels einer möglichen Ausgestaltung der vorgestellten Düsenanordnung umfasst und wobei das Produkt in einem one-shot Verfahren gegossen wird.

Das mittels des vorgestellten Herstellungsverfahrens hergestellte Produkt kann insbesondere ein großes bzw. großflächiges Produkt sein.

Es kann vorgesehen sein, dass das Produkt eine Wellplatte, insbesondere eine 96-Wellplatte ist.

Eine Wellplatte kann bspw. ein Streifen bzw. eine Einheit sein, von denen eine Vielzahl zu einer größeren Wellplatte, wie bspw. einer 96-fach Wellplatte zusammengefügt werden können.

Alternativ zu einem Streifen bzw. einer Einheit, kann eine große Wellplatte, wie bspw. eine 96-Wellplatte, komplett in einem Stück hergestellt werden.

Weitere Merkmale, Einzelheiten und Vorteile der Erfindung ergeben sich aus dem Wortlaut der Ansprüche sowie aus der folgenden Beschreibung von Ausführungsbeispielen anhand der Zeichnungen. Es zeigen:
- Fig. 1: eine schematische Detaildarstellung einer möglichen Ausgestaltung eines vorgestellten Düsenriegels,
- Fig. 2: eine schematische Darstellung einer möglichen Ausgestaltung eines Formeinsatzes bzw. einer Formnestplatte,
- Fig. 3: eine Darstellung eines Systems aus dem Düsenriegel gemäß Fig. 1 und dem Formeinsatz gemäß Fig. 2.

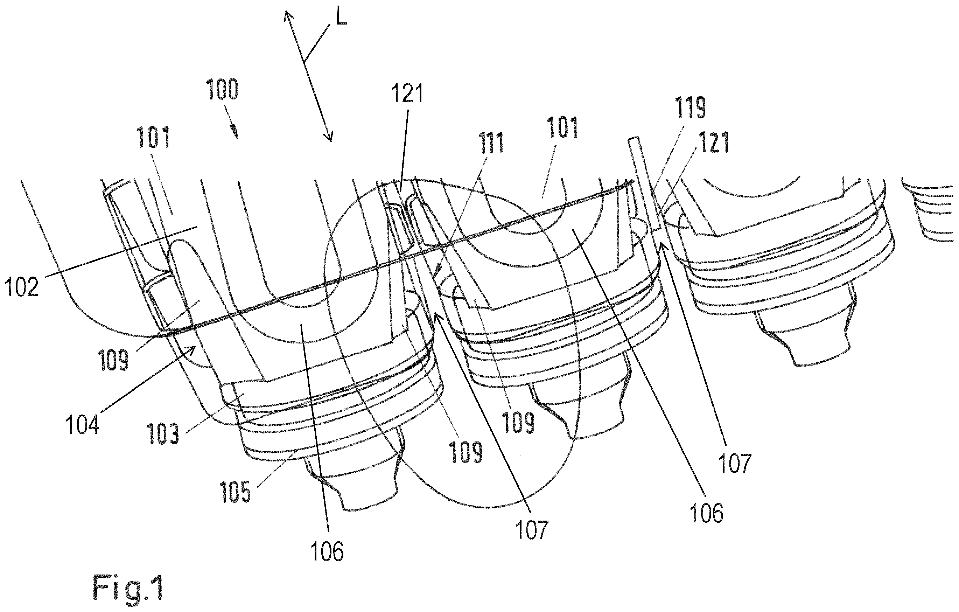

Der in Fig. 1 allgemein mit 100 bezeichnete Düsenriegel ist zum Verarbeiten einer fließfähigen Masse ausgebildet und Teil eines (nicht näher dargestellten) Heißkanalsystems, das in einer (ebenfalls nicht gezeigten) Spritzgießvorrichtung eingesetzt ist.

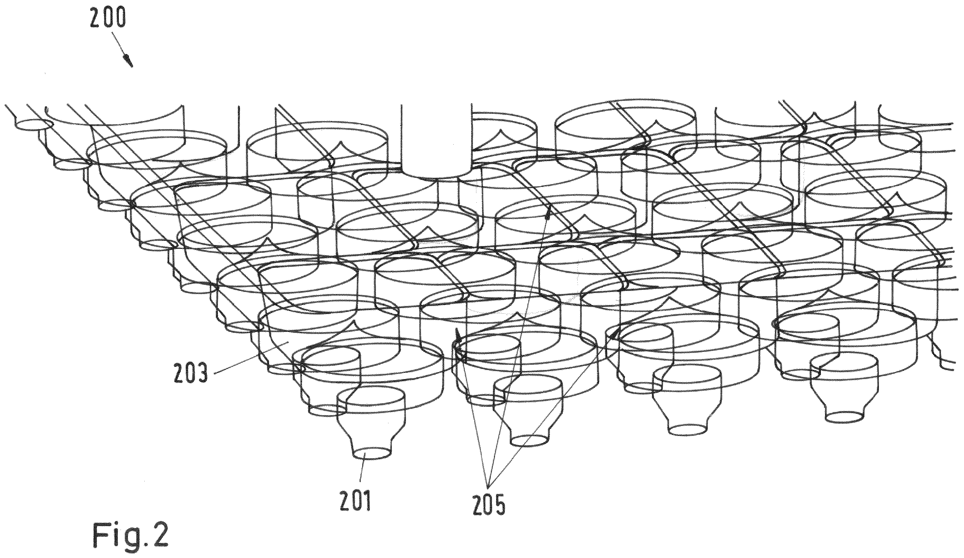

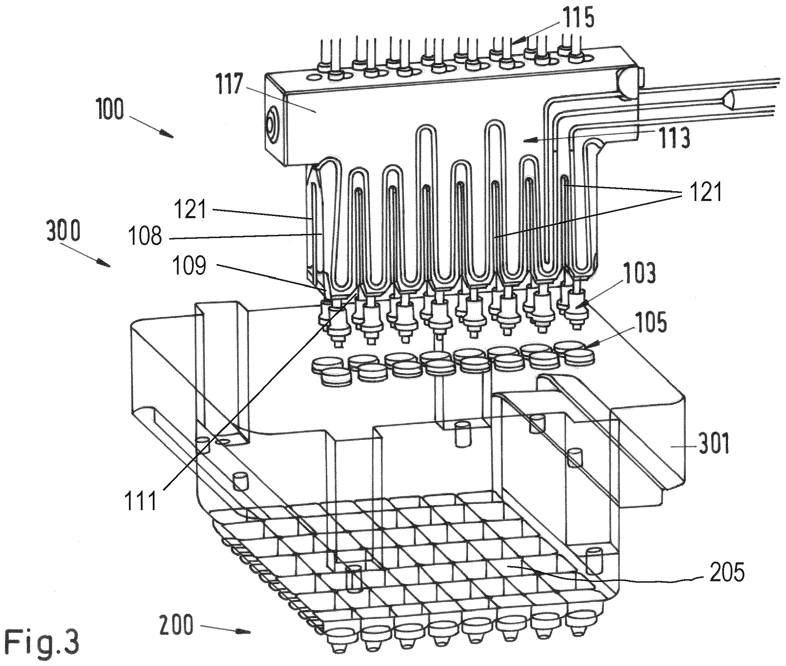

Der Düsenriegel 100 ist an einer (gleichfalls nicht gezeigten) Verteilerplatte des Heißkanalsystems montiert. Er hat hierfür - wie Fig. 3 zeigt - einen Kopfbereich 117, der eine Vielzahl materialführender Rohre 101 (Materialrohre) trägt oder bildet, wobei der Kopfbereich 117 und die Vielzahl der Materialrohre 101 zum Leiten der fließfähigen Masse durch den Düsenriegel 100 ausgebildet sind, um die fließfähige Masse (nicht dargestellten) Formnestern zuzuführen, die in Formeinsätzen 200 oder einer Formnestplatte ausgebildet sind. Die Formeinsätze 200 bzw. die Formnestplatte umfassen eine Vielzahl Anspritzpunkte 201 zum Leiten der fließfähiger Masse in eine Kavität (siehe Fig. 2).

Jedes materialführende Rohr 101 hat einen Rohr-Hauptteil 102 und einen Rohr-Anbindungsbereich 103, 105.

Der Rohr-Hauptteil 102 weist einen im Wesentlichen rechteckigen Querschnitt mit in Längsrichtung L verlaufender Eckkanten 108 auf. In oder auf der Seitenfläche eines jeden materialführenden Rohres 101 ist wenigstens ein Temperierungselement 106 zum Temperieren des Düsenriegels 100 ausgebildet, wobei sich die Temperierungselemente 106 bis in den Kopfbereich 117 des Düsenriegels 100 hinein erstrecken können.

Mit dem Rohr-Anbindungsbereich 103, 105 greift jedes Materialrohr 101 dichtend in die Formnestplatte bzw. in die darin ausgebildeten Formeinsätze 200 ein. Diese ist hierfür mit entsprechenden (nicht benannten) Ausnehmungen versehen, die umfangsseitig jeweils einen Dichtsitz bilden.

Der Rohr-Anbindungsbereich 103, 105 wird im vorliegenden Ausführungsbeispiel von einer Nadelführung 103 gebildet, auf der ein zusätzlicher Dichtring 105 angeordnet ist. Die Nadelführung 103 besteht vorzugsweise aus einem verschleißfesten Material, während der Dichtring 105 aus einem schlecht wärmeleitenden Material gefertigt ist, um den Wärmeübergang von dem Düsenriegel 100 auf die Formnestplatte 200 zu minimieren.

In jedem materialrührenden Rohr 101 ist, wie Fig. 3 weiter zeigt, eine Verschlussnadel 115 eingesetzt, die durch den Kopfbereich 117 und die Verteilerplatte hindurch mit einem geeigneten Antrieb verbunden ist, um die Verschlussnadel 115 zwischen einer Schließstellung und einer Öffnungsstellung zu bewegen. Das gegenüberliegende Ende einer jeden Verschlussnadel 115 greift in einen Dichtsitz einer (nicht gezeigte) Angussöffnung ein. Letztere ist entweder im Formeinsatz 200 bzw. in der Formnestplatte oder in der Nadelführung 103 ausgebildet.

Jedes materialführende Rohr 101 hat endseitig eine Düsenspitze, ein Düsenmundstück oder - wie im vorliegenden Ausführungsbeispiel, bei welchem das Heißkanalsystem als Nadelverschlussystem ausgebildet ist - eine Nadelführung 103, über welche die Strömungskanäle in den Materialrohren 101 in ein jeweils zugeordnetes Formnest münden.

Jede Düsenspitze, jedes Düsenmundstück oder jede Nadelführung bildet bevorzugt umfangsseitig zumindest einen Teil des jeweiligen Rohr-Anbindungsbereichs 103, 105 und ist in dem jeweils zugeordneten materialführenden Rohr 101 fixiert. Die Nadelführung 103 kann bei Bedarf auch schwimmend im Materialrohr 101 oder in einem separat ausgebildeten Wärmeleiteinsatz gelagert sein, der endseitig in das Materialrohr 101 eingesetzt ist.

Wie Fig. 1 weiter zeigt, ist jedes Materialrohr 101 im Bereich seiner Eckkanten 108 mit Aussparungen 109 versehen, wobei die Aussparungen 109 an einem dem Kopfbereich 117 gegenüberliegenden Ende 104 jeweiliger Rohre 101 der Vielzahl Rohre 101 ausgebildet sind. Dabei liegt jede Aussparung 109 in Richtung des Kopfbereichs 117 oberhalb des Anbindungsbereichs 103, 105 im Rohr-Hauptteil 102 eines jeden Rohres 101, wobei jeweils zumindest zwei Aussparungen 109 benachbarter Materialrohre 101 Zwischenräume 111 bilden.

Durch die Aussparungen 109 an den Materialrohren 101 und die dadurch gebildeten Zwischenräume 111 besteht die Möglichkeit, die Formeinsätze oder die Formnestplatte mit ergänzenden ode zusätzlichen Abschnitten oder Elementen 205 zu versehen, was insbesondere dann von Vorteil ist, wenn großflächige Produkte mit eng liegenden Anspritzpunkten gefertigt werden sollen, denn mit den zusätzlichen Abschnitten oder Elementen 205 lässt sich die Formnestplatte bzw. die Formeinsätze 200 gezielt verstärken.

Dies ist insbesondere dann von Vorteil, wenn mit dem Düsenriegel 100 oder mit einer Anordnung von Düsenriegeln Mikrotiterplatten oder Kavitätenplatten (englisch: well plates oder microwell plates) produziert werden sollen, die über 48, 96 oder mehr Kavitäten (englisch: wells) verfügen, wobei die Nestabstände der einzelnen Kavitäten relativ eng nebeneinander ausgebildet sind.

Jede Formnestplatte bzw. jeder Formeinstz 200 erhält durch die zusätzlichen Abschnitte oder Elemente 205 eine hohe Stabilität, wobei die Abschnitte und Elemenete 205 in die Zwischenräume 111 der Düsenriegel 100 eingreifen können, ohne dass sich die Außenabmessungen des Heißkanalwerkzeugs verändern oder angepasst werden müssen.

Bevorzugt ist jede Aussparung 109 unmittelbar über dem Anbindungsbereich 103, 105 eines jeden Rohres 101 ausgebildet, so dass die Formnestplatte bzw. die Formeinsätze 200 mit ihren Verstärkungselementen 205 unmittelbar in die Zwischenräume 111 eingreifen können. Jeder Zwischenraum 111 wird von mindestens zwei, vorzugsweise vier Aussparungen 109 gebildet.

In Bezug auf die Geometrie der Verstärkungselemente 205 ist es günstig, wenn die Aussparungen 109 in Bezug auf eine Längsrichtung L der materialführenden Rohre 101 schräg verlaufen.

Wie Fig. 2 weiter zeigt, ist an einem jeweiligen Anspritzpunkt 201 ein Aufbau 203 ausgebildet, der ein Verstärkungselement 205 in Form einer Wandung, einer Verrippung oder einer Verstrebung umfasst. Die jeweiligen Verstärkungselemente 205 des Formeinsatzes 200 wirken zusammen als Schutz gegen eine Verformung des Formeinsatzes 200 oder der Formnestplatte, so dass eine relative Ausrichtung der Anspritzpunkte 201 zueinander auch bspw. bei einem Transport des Verstärkungselements 200 unverändert bleibt.

Neben den Aussparungen 109 sind die materialführenden Rohre 101 des Düsenriegels 100 durch Ausnehmungen 121 gleichmäßig voneinander beabstandet, wobei die Ausnehmungen 121 in Längs- und Querrichtung des Düsenriegels 100 zwischen den materialführenden Rohren 101 verlaufen, namentlich zwischen den Rohr-Hauptteilen 102.

Die von den Aussparungen 109 der materialführenden Rohre 101 geschaffenen Zwischenräume 111 sind dabei in wenigstens einer Dimension größer als die zwischen den materialführenden Rohren 101 bestehenden Ausnehmungen 121. Dadurch lassen sich innerhalb des Heißkanalsystems einerseits enge Nestabstände realisieren. Andererseits schaffen die Zwischenräume 111 Raum für die Formnestplatte bzw. für die Formeinsätze, damit diese mit zusätzlichen Elementen oder Abschnitten 205 verstärkt werden können.

Um zusätzlich zu den Temperierungselementen 106 gezielt Wärme in den Düsenriegel 100 sowie in die Materialrohre 101 einbringen zu können, ist in zumindest einem Teil der zwischen den Rohren 101 verlaufenden Ausnehmungen 121 wenigstens ein weiteres Temperierungselement 119 angeordnet. Diese Temperierungselemente 119 umfassen optionale Dickschichtheizungen, die zusammen oder grennt von den Temperierungselementen 106 angesteuert werden..

In Fig. 3 ist ein System 300 dargestellt, dass den Düsenriegel 100 gemäß Fig. 1 und ein Werkzeug 301, das den Formeinsatz 200 gemäß Fig. 2 umfasst, dargestellt.

Hier ist erkennbar, dass an dem Düsenriegel 100 Temperierungskanäle 113 ausgebildet sind, in denen die Temperierungselemente 106 auf oder eingebracht sind.

Der Düsenriegel 100 umfasst vorliegend 8 paarige Materialrohre 101, also insgesamt 16 Rohre 101, die sich aus einem Kopfbereich 117 des Düsenriegels 100 erstrecken.

Durch die Verschlussnadeln 115 kann ein Fluss von fließfähiger Masse durch den Düsenriegel 100 und den Formeinsatz 200 in eine jeweilige Form gesteuert werden.

Über die Isolationsringe 105 ist der Düsenriegel 100 thermisch von dem Werkzeug 301 getrennt bzw. isoliert. Dazu können die Isolationsringe 105 bspw. aus einer Titanlegierung oder einer Keramik gefertigt sein.

Für die Herstellung eines großflächigen Produkts lassen sich mehrere Düsenriegel 100 zu einer Düsenanordnung verbinden. Diese Verbindung erfolgt vorzugsweise über eine Verteilerplatte, die über den Düsenriegeln 100 angeordnet ist.

Ein Spritzgießwerkzeug zum Verarbeiten einer fließfähigen Masse umfasst folglich bevorzugt wenigstens einen erfindungsgemäßen Düsenriegel 100 sowie eine Formnestplatte 200, die mit zusätzlichen Elementen oder Abschnitten 205 versehen ist, wobei letztere in montierter Position der Formnestplatte 200 und bei geschlossenem Spritzgießwerkzeug in jeweils zugeordnete Zwischenräume 111 des Düsenriegels 100 oder der Düsenanorndung eingreifen.

Das erfindungsgemäße Spritzgussverfahren zum Herstellen eines großflächigen Produkts, sieht vor, dass eine Formnestplatte 200, die mit einem Aufbau 203 aus verstärkenden Elementen oder Abschnitten 205 versehen ist, in ein Heißkanalysem eingesetzt wird, wobei die Elemente oder Abschnitte 205 in von Aussparungen 109 der Materialrohre 101 gebildeten Zwischenräume 111 eingreifen, und dass das Produkt in einem one-shot-Verfahren gegossen wird.

Das Produkt ist bevorzugt eine Mikrotiterplatte oder Kavitätenplatte (englisch: well plate oder microwell plate) mit 96 Kavitäten (englisch: wells).

Die Erfindung ist nicht auf eine der vorbeschriebenen Ausführungsformen beschränkt, sondern in vielfältiger Weise abwandelbar. So kann der Rohr-Anbindungsbereich 103, 105 auch vom Materialrohr 101 selbt gebildet sein, indem dieses endseitig mit einem entsprechenden Abschnitt versehen wird. Der Rohr-Anbindungsbereich 103, 105 kann auch von einem Düsenschaft gebildet sein, welcher das Materialrohr 101 umgibt.

Das Heißkanalystem kann - je nach dem zu verarbeitenden Material - auch als Kaltkanalystem ausgebildet sein.

Sämtliche aus den Ansprüchen, der Beschreibung und der Zeichnung hervorgehenden Merkmale und Vorteile, einschließlich konstruktiver Einzelheiten, räumlicher Anordnungen und Verfahrensschritten, können sowohl für sich als auch in den verschiedensten Kombinationen erfindungswesentlich sein.

### Bezugszeichenliste

- L: Längsrichtung
- 100: Düsenriegel
- 101: Materialführendes Rohr
- 102: Rohr-Hauptteil
- 103: Rohr-Anbindungsbereich
- 104: Ende
- 105: Rohr-Anbindungsbereich
- 106: Temperierelement
- 107: Bereich
- 108: Eckkante
- 109: Aussparung
- 111: erster Zwischenraum
- 113: Temperierungskanal
- 115: Verschlussnadel
- 117: Kopfbereich
- 119: Temperierungselement
- 121: Ausnehmung
- 200: Formeinsatz/Formnestplatte
- 201: Anspritzpunkt
- 203: Aufbau
- 205: Abschnitt/Element/Verstärkungselement
- 300: System
- 301: Werkzeug

## Patentansprüche

1. Düsenriegel (100) für ein Heißkanalsystem zum Verarbeiten einer fließfähigen Masse,
a) mit einem Kopfbereich (117), der eine Vielzahl materialführender Rohre (101) trägt oder bildet,
b) wobei der Kopfbereich (117) und die Vielzahl der materialführenden Rohre (101) zum Leiten der fließfähigen Masse durch den Düsenriegel (100) ausgebildet sind,
c) wobei jedes materialführende Rohr (101) einen Rohr-Hauptteil (102) und einen Rohr-Anbindungsbereich (103, 105) aufweist, und
d) mit Aussparungen (109), die an einem dem Kopfbereich (117) gegenüberliegenden Ende (104) jeweiliger Rohre (101) der Vielzahl Rohre (101) ausgebildet sind,
e) wobei jede Aussparung (109) in Richtung des Kopfbereichs (117) oberhalb des Anbindungsbereichs (103, 105) im Rohr-Hauptteil (102) eines jeden Rohres (101) ausgebildet ist, und
f) wobei jeweils zumindest zwei Aussparungen (109) benachbarter Rohre (101) Zwischenräume (111) bilden.

2. Düsenriegel (100) nach Anspruch 1, **dadurch gekennzeichnet, dass** jede Aussparung (109) unmittelbar über dem Anbindungsbereich (103, 105) eines jeden Rohres (101) ausgebildet ist.

3. Düsenriegel (100) nach Anspruch 1 oder 2, **dadurch gekennzeichnet, dass** die Aussparungen (109) in Bezug auf eine Längsrichtung (L) der materialführenden Rohre (101) schräg verlaufen.

4. Düsenriegel (100) nach einem der voranstehenden Ansprüche, **dadurch gekennzeichnet, dass** an jedem materialführenden Rohr (101) mindestens zwei, vorzugsweise vier Aussparungen (109) ausgebildet sind.

5. Düsenriegel (100) nach einem der voranstehenden Ansprüche, **dadurch gekennzeichnet, dass** der Rohr-Hauptteil (102) eines jeden materialführenden Rohres (101) einen im Wesentlichen eckigen oder rechteckigen Querschnitt mit in Längsrichtung (L) verlaufender Eckkanten (108) aufweist, wobei die Aussparungen (109) im Bereich der Eckkanten (102) ausgebildet sind.

6. Düsenriegel (100) nach einem der voranstehenden Ansprüche, **dadurch gekennzeichnet, dass** in oder auf den Seitenflächen der materialführenden Rohre (101) und/oder des Kopfbereichs (117) wenigstens ein Temperierungselement (106) zum Temperieren des Düsenriegels (100) ausgebildet ist.

7. Düsenriegel (100) nach einem der voranstehenden Ansprüche, **dadurch gekennzeichnet, dass** die materialführenden Rohre (101) des Düsenriegels (100) durch Ausnehmungen (121) voneinander beabstandet sind, wobei die Ausnehmungen (121) in Längs- und/oder Querrichtung des Düsenriegels (100) zwischen den materialführenden Rohren (101) verlaufen.

8. Düsenriegel (100) nach einem der voranstehenden Ansprüche, **dadurch gekennzeichnet, dass** die von den Aussparungen (109) der materialführenden Rohre (101) geschaffenen Zwischenräume (111) in wenigstens einer Dimension größer sind als die zwischen den materialführenden Rohren (101) bestehenden Ausnehmungen (121).

9. Düsenriegel (100) nach Anspruch einem der voranstehenden Ansprüche, **dadurch gekennzeichnet, dass** in zumindest einem Teil der zwischen den Rohren (101) verlaufenden Ausnehmungen (121) wenigstens ein weiteres Temperierungselement (119) angeordnet ist.

10. Düsenanordnung für ein Heißkanalsystem zum Verarbeiten einer fließfähigen Masse, wobei die Düsenanordnung eine Vielzahl Düsenriegel (100) nach einem der Ansprüche 1 bis 9 umfasst.

11. Düsenanordnung nach Anspruch 10, **dadurch gekennzeichnet, dass** die Düsenanordnung 6 Düsenriegel (100) umfasst, die jeweils acht Rohrpaare umfassen.

12. Spritzgießwerkzeug zum Verarbeiten einer fließfähigen Masse, mit wenigstens einem Düsenriegel nach einem der Ansprüche 1 bis 9 und mit einer Formnestplatte oder einem Formeinsatz (200), wobei die Formnestplatte und/oder der Formeinsatz (200) eine Vielzahl Elemente oder Abschnitte (205) umfasst, die sich in montierter Position der Formnestplatte oder der Formeinsätze (200) und bei geschlossenem Spritzgießwerkzeug in jeweils zugeordnete Zwischenräume (111) des Düsenriegels (100) oder der Düsenanorndung hinein erstrecken.

13. Spritzgießwerkzeug nach Anspruch 12, **dadurch gekennzeichnet, dass** das Spritzgießwerkzeug eine Düsenanordnung nach Anspruch 10 oder 11 umfasst.

14. Spritzgussverfahren zum Herstellen eines Produkts, wobei das Spritzgussverfahren umfasst:
▪ Spritzgießen des Produks mittels einer Düsenanordnung nach einem der Ansprüche 10 oder 11, wobei das Produkt in einem one-shot-Verfahren gegossen wird.

15. Spritzgussverfahren nach Anspruch 15, **dadurch gekennzeichnet, dass** das Produkt eine Mikrotiterplatte oder Kavitätenplatte ist (englisch: well plate oder microwell plate) mit insbesondere 96 Kavitäten (englisch: wells).
